Europäisches Patentamt

European Patent Office

Office européen des brevets

(19)

(11) Veröffentlichungsnummer: **0 299 223 B1**

# (12) EUROPÄISCHE PATENTSCHRIFT

(45) Veröffentlichungstag der Patentschrift: **11.11.92**

(51) Int. Cl.⁵: **B62D 49/08**, B62D 37/04

(21) Anmeldenummer: **88109657.2**

(22) Anmeldetag: **16.06.88**

(54) **Fahrzeug mit einem System zur dynamischen Stabilisierung seiner Bewegungen.**

(30) Priorität: **16.07.87 DE 3723488**

(43) Veröffentlichungstag der Anmeldung:
**18.01.89 Patentblatt 89/03**

(45) Bekanntmachung des Hinweises auf die
Patenterteilung:
**11.11.92 Patentblatt 92/46**

(84) Benannte Vertragsstaaten:
**DE FR GB IT**

(56) Entgegenhaltungen:
DE-A- 2 149 369
DE-A- 2 856 583
DE-A- 3 346 892
FR-A- 1 180 821
FR-A- 2 239 418

(73) Patentinhaber: **ROBERT BOSCH GMBH**
**Postfach 30 02 20**
**W-7000 Stuttgart 30(DE)**

(72) Erfinder: **Aichele, Hans, Dipl.-Ing.**
**Hänfingweg 31**
**W-7000 Stuttgart 31(DE)**
Erfinder: **Hesse, Horst, Dr. Dipl.-Ing.**
**Auberlenwegg 13b**
**W-7000 Stuttgart 1(DE)**
Erfinder: **Höfer, Friedrich-Wilhelm, Dipl.-Ing.**
**Georg-Friedrich-Händel-Weg 6**
**W-7257 Ditzingen 5(DE)**
Erfinder: **Mohaupt, Hubert**
**Fröbelstrasse 7**
**W-7120 Bietigheim-Bissingen(DE)**
Erfinder: **Schumacher, Werner, Dipl.-Ing.**
**Danziger Strasse 11**
**W-7144 Asperg(DE)**

EP 0 299 223 B1

## Beschreibung

### Stand der Technik

Die Erfindung geht aus von einem Fahrzeug mit einem System zur dynamischen Stabilisierung seiner Bewegungen nach der Gattung des Hauptanspruchs. Es ist schon eine solches Fahrzeug aus der EP-B1-0 090 971 bekannt, bei dem am Fahrzeug ein Anbaugerät gelenkig befestigt ist und über ein elektrohydraulisches Hubwerk während der Fahrt so verstellt wird, daß eine aktive Dämpfung von Nickschwingungen des Fahrzeugs erreicht wird, um auf diese Weise die Lenksicherheit des Fahrzeugs bzw. dessen Arbeitsgeschwindigkeit zu erhöhen. Die Schwingungsdämpfung soll hierbei in der Weise erreicht werden, daß die Bewegungen des als Tilgermasse dienenden Anbaugeräts gleichsinnig zu den Bewegungen des Fahrzeugs verlaufen, bezogen auf eine horizontale Schwingungsachse. Ein Fahrzeug mit diesem System hat den Nachteil, daß es keine optimale Dämpfungswirkung erreicht. Am Anbaugerät kann sich dabei zu einer Abwärtsbewegung infolge einer Nickbewegung des Fahrzeugs eine zusätzliche Abwärtsbewegung zur aktiven Schwingungsdämpfung addieren, was insbesondere bei einem wenig über dem Boden geführten Anbaugerät den Fahrbetrieb des Fahrzeugs stören kann. Ferner können die gleichsinnigen Bewegungen von Fahrzeug und Tilgermasse zu erhöhten Kräften und damit zu größeren Belastungen der Bauteile führen. Weiterhin ist ungünstig, daß eine Lagerückführung fehlt, so daß die Lage der Tilgermasse infolge von Drift bei eingeschaltetem Schwingungsdämpfungs-System weglaufen kann. Ferner erfordert dieses System einen zusätzlichen Beschleunigungssensor, wodurch dessen Aufwand erhöht wird.

Ferner ist aus der DE-A-3 346 892 ein Traktor mit angelenktem Pflug und mit einem System zur Schwingungsdämpfung bekannt, bei dem mit Hilfe der elektrohydraulischen Regeleinrichtung zur Pflugverstellung eine Schwingungsdämpfung des Anbaugeräts in Aushubstellung erreicht werden soll. Bei diesem System wird der angelenkte Pflug mit Hilfe der Regeleinrichtung gegensinnig zu den Nickbewegungen des Traktors gesteuert. Damit wird eine dynamische Entkoppelung des Pfluges vom Traktor erreicht, wobei als Regelungsziel die absolute Lage des Pfluges im Raum möglichst ruhig gehalten werden soll. Somit wird hier bei einem Gespann aus Traktor und angelenktem Pflug ein günstigeres Nickschwingungsverhalten erreicht, wie es bei einem Traktor ohne Anbaugerät der Fall ist. Es wird also der neutrale Bereich, in welchem die angelenkte Masse weder einen tilgenden noch einen anregenden Einfluß auf das Fahrzeug ausübt, vergrößert. Auch diese Dämpfung mit gegensinniger Bewegung der aneinander angelenkten Massen ist nicht optimal, insbesondere erlaubt sie keine nachhaltige Verbesserung des Schwingungsverhaltens des Traktors. Bei einer Ausführungsform des Fahrzeugs wird zwar ein Lageregelkreis verwendet; doch kann hier eine am Eingang dieses Lageregelkreises auftretende Drift dazu führen, daß der Pflug aus seiner Aushubstellung wegdriftet. Auch ist im Ausführungsbeispiel des Traktors kein Lagesensor und kein Kraftsensor erkennbar und das zugehörige Blockschaltbild zeigt nur Sensoren und Regler für Winkelgrößen $\beta$ und $\phi$.

### Vorteile der Erfindung

Das erfindungsgemäße Fahrzeug mit einem System zur dynamischen Stabilisierung seiner Bewegungen mit den kennzeichnenden Merkmalen des Hauptanspruchs hat demgegenüber den Vorteil, daß mit ihm eine optimale Dämpfungswirkung erreicht wird. Durch die angegebene Phasenverschiebung von gleichnamigen Bewegungsgrößen der aneinander gekoppelten Massen wird erreicht, daß stets eine maximale Dämpfungskraft auf das schwingende Fahrzeug erreicht wird, indem der Verlauf der Dämpfungskraft gegenphasig zum Geschwindigkeitsverlauf des schwingenden Fahrzeugs gehalten wird. Dadurch läßt sich als Regelungsziel bei hoher Transportgeschwindigkeit eine größere Lenksicherheit des Fahrzeugs erreichen. Zudem werden die Bauteile geringeren Kräften ausgesetzt, was wiederum eine leichtere Bauweise begünstigt. Durch die ohnedies vorhandene elektrohydraulische Hubwerks-Regeleinrichtung läßt sich dabei der Aufwand minimal halten.

Durch die in den Unteransprüchen aufgeführten Maßnahmen sind vorteilhafte Weiterbildungen und Verbesserungen des im Hauptanspruch angegebenen Fahrzeugs möglich. Besonders einfache, kostengünstige Ausführungsformen und sicher arbeitende Systeme werden ermöglicht, wenn die Sensoren zur Ermittlung des schwingungsabhängigen Signals nach den Ansprüchen 2 bis 4 als Kraftmeßbolzen ausgebildet werden. Äußerst zweckmäßig ist es, wenn das schwingungsabhängige Signal mit Sensoren nach Anspruch 4 und 5 hergeleitet wird; in diesen Fällen kann auf eine übliche Dreipunkt-Anlenkung verzichtet und eine aktive Schwingungstilgung auch mit anderen Anlenkungsarten des Anbaugeräts durchgeführt werden. Eine besonders wirksame und genaue Arbeitsweise läßt sich gemäß Anspruch 6 erzielen, wodurch auch der Einfluß von Sättigungsgrenzen von Bauelementen verringert werden kann. In besonders einfacher und vorteilhafter Weise läßt sich gemäß den Ansprüchen 7 bis 9 der dynamische Signalanteil zur weiteren Verarbeitung im Tilgungsregelkreis gewinnen. Besonders zweckmäßig für eine wirksame Arbeitsweise ist eine Ausbildung nach den Ansprüchen 10 und 11, wodurch auch ein Wegdriften des Anbaugeräts vermieden wird. Weitere besonders vorteilhafte Ausgestaltungen ergeben sich aus den übrigen Ansprüchen, der Beschreibung sowie der Zeichnung.

Zeichnung

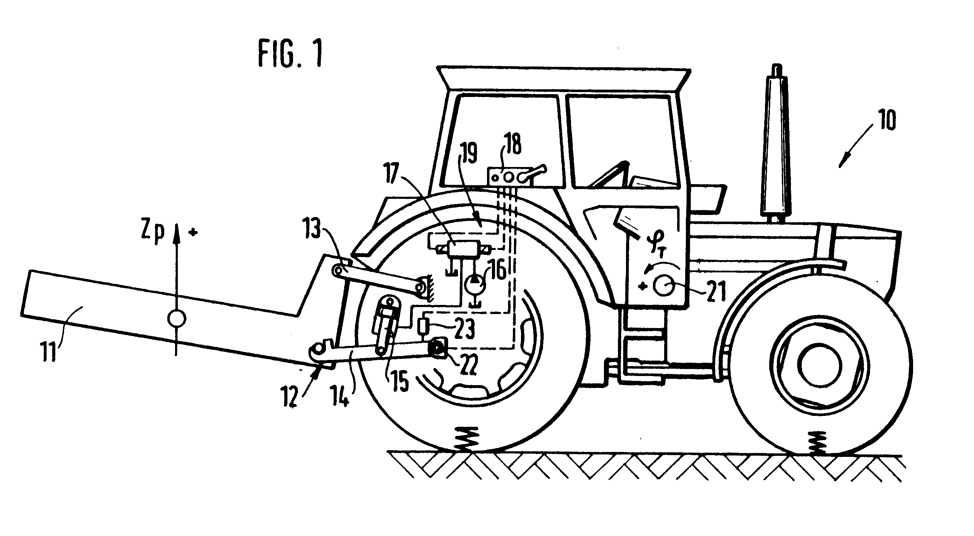

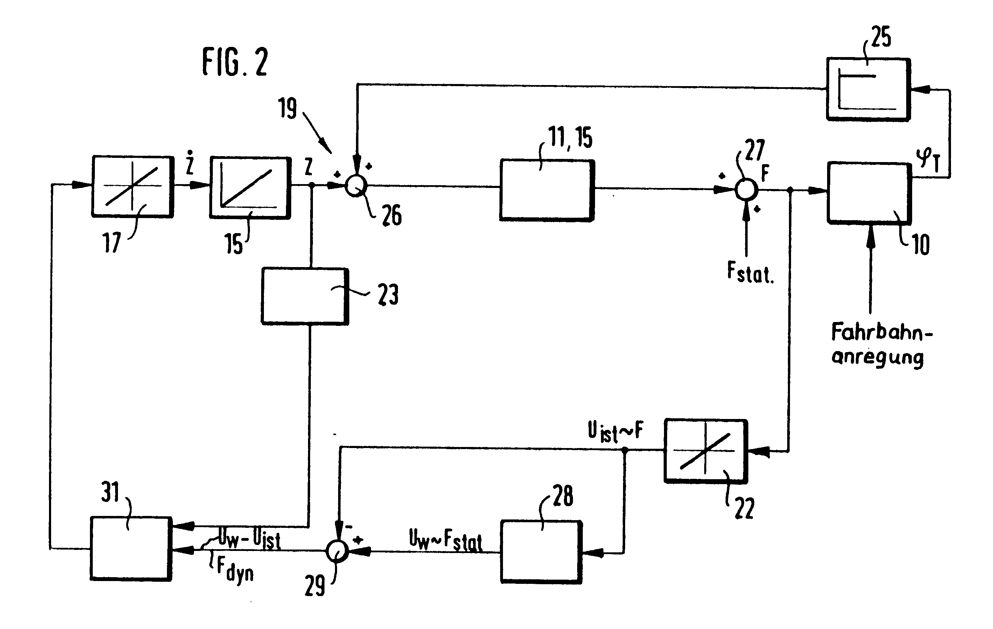

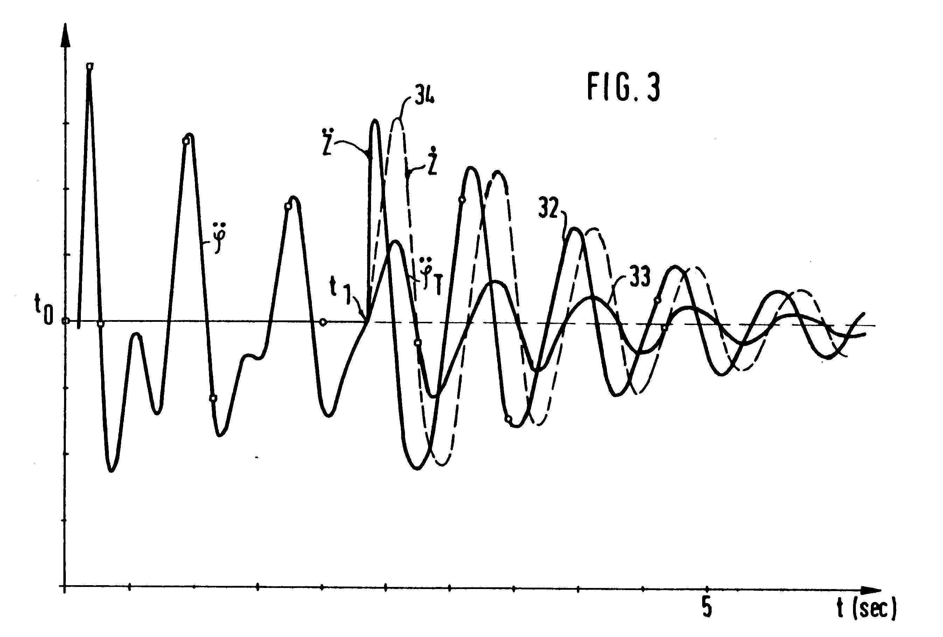

Ein Ausführungsbeispiel der Erfindung ist in der Zeichnung dargestellt und in der nachfolgenden Beschreibung näher erläutert. Es zeigen die Figur 1 einen Traktor mit angekoppeltem Anbaugerät in Aushubstellung und mit einem System zur aktiven Schwingungsdämpfung, Figur 2 ein Blockschaltbild für das System zur Schwingungsdämpfung nach Fi- gur 1 in vereinfachter Darstellung und Figur 3 den Kennlinien-Verlauf von Bewegungsgrößen von Traktor und Anbaugerät nach Figur 1.

Beschreibung des Ausführungsbeispiels

In der Figur 1 ist ein Gespann bestehend aus einem Traktor 10 als Fahrzeug und einem heckseitig befestigten Anbaugerät 11 dargestellt, das beispielsweise als Pflug ausgebildet sein kann. Das Anbaugerät 11 ist dabei in an sich bekannter Weise über ein Dreipunktgestänge 12 mit Oberlenker 13 und Unterlenker 14 am Traktor 10 höhenverstellbar angelenkt. Zur Verstellung des Anbaugeräts 11 greift am Unterlenker 14 ein hydraulischer Kraftheber 15 an, der in einen hydraulischen Kreis mit einer Pumpe 16 und einem elektrohydraulischen Regelventil 17 geschaltet ist. Das Regelventil 17 wird über ein elektronisches Steuergerät 18 angesteuert, das ebenso wie das Regelventil 17 und das Dreipunktgestänge 12 mit dem Kraftheber 15 Teile einer elektrohydraulischen Hubwerks-Regeleinrichtung 19 ist.

Mit Hilfe dieser Regeleinrichtung 19 kann beispielsweise ein als Pflug ausgebildetes Anbaugerät 11 nicht nur in Betriebsstellungen in verschiedenen Regelungsarten betrieben werden, sondern auch aus der Betriebsstellung heraus in die gezeichnete Aushubstellung verfahren werden, in der es mit einer begrenzten Amplitude um eine mittlere Aushubstellung herum bewegt werden kann. Die Regeleinrichtung 19 steuert dabei die Bewegungen des als Tilgermasse verwendeten Anbaugeräts 11 derart, daß die Schwingungen des Traktors 10, insbesondere dessen Nickbewegungen um seine horizontal liegende Schwingungsachse 21 aktiv gedämpft werden, wie nachstehend noch ausführlicher beschrieben wird. Die Regeleinrichtung 19 verarbeitet zu diesem Zweck die Istwertsignale von mehreren Sensoren, wozu einmal der Unterlenker 14 über einen an sich bekannten Kraftmeßbolzen 22 am Traktor 10 angelenkt ist, wobei der Kraftmeßbolzen zu dort auftretenden Kräften proportionale Signale an das elektronische Steuergerät 18 meldet. Ferner ist ein Lagesensor 23 vorgesehen, welcher von der Lage des Anbaugeräts 11 relativ zum Schlepper 10 abhängige Signale an das Steuergerät 18 meldet. Beim Fahren des Traktors 10 über unebenes Gelände treten Nick- und Vertikalschwingungen des Gespanns auf, die infolge der Massenträgheit des Anbaugeräts 11 zu Beschleunigungskräften führen, welche vom Kraftmeßbolzen 22 gemessen werden können. Diese Signale der Kraftmeßeinrichtung werden in der Regeleinrichtung 19 dazu benutzt, um eine aktive Schwingungsdämpfung zu betreiben.

Die Figur 2 zeigt nun als Blockschaltbild in vereinfachter Darstellung ein System zur dynamischen Stabilisierung der Bewegung des Fahrzeugs, also zur aktiven Schwingungsdämpfung, wie es in der Hubwerks-Regeleinrichtung 19 nach Figur 1 integriert ist.

Dabei bildet das System Anbaugerät 11 - Zylinder 15 zusammen mit dem Traktor 10 eine schwingungsfähige Einheit, die durch Stöße von außen auf den Traktor 10 zu Schwingungen angeregt werden kann. Der Nickwinkel $\phi$ des Traktors 10 um seine Schwingungsachse 21 wird über verschiedene kinematische Faktoren 25 verändert und auf einen ersten Summenpunkt 26 zurückgeführt. An einem zweiten Summenpunkt 27 zwischen Anbaugerät 11 und Traktor 10 wird eine von der Masse des Anbaugeräts 11 herrührende statische Kraft $F_{stat}$ zugeführt, so daß die gesamte Kraft F auf den Kraftmeßbolzen 22 einwirkt. Wie Figur 2 ferner näher zeigt, wird mit der Kraftmeßeinrichtung 22 für die Hubwerks-Regeleinrichtung 19 somit zugleich das Signal für die Bewegung des als Tilgermasse dienenden Anbaugeräts 11 gewonnen. Der Kraftmeßbolzen 22 liefert als Ausgangssignal eine elektrische Spannung, die proportional zur Größe der jeweiligen Kraft ist. Mit Hilfe eines Tiefpaßfilters 28 werden anschließend die dynamischen und die statischen Anteile voneinander getrennt, so daß an einem dritten Summenpunkt 29 ein elektrisches Signal gewonnen wird, das dem dynamischen Anteil entspricht und somit proportional zur Kraft $F_{dyn}$ ist. Diese zum dynamischen Kraftanteil proportionalen Signale dienen als Eingangsgröße für den Regelkreis und werden einem Proportional-Regler 31 eingegeben. Das Ausgangssignal des P-Reglers 31 wird über das elektrohydraulische Proportional-Ventil 17 in eine geschwindigkeitsabhängige Größe $\dot{z}$ umgewandelt, die wiederum dem Kraftheber 15 eingegeben wird, der an seinem Ausgang ein wegabhängiges Signal z an den ersten Summenpunkt 26 weiterführt. Dieses wegabhängige Signal z wird vom Sensor 23 erfaßt und zugleich dem Proportional-Regler 31 als Rückführgröße eingegeben. Bemerkenswert ist somit der Umstand, daß sowohl der Regler 31 wie auch das Regelventil 17 im Regelkreis als reine Proportionalglieder ausgebildet sind.

Bei dem zur Schwingungstilgung dienenden Regelkreis 19 nach Figur 2 wird nun der Zusammenhang ausgenutzt, daß

$$F_{dyn} \sim \ddot{\phi}$$

ist, das heißt, daß bei nicht betätigtem Kraftheber 15 der dynamische Kraftanteil $F_{dyn}$ proportional ist zur Nickbeschleunigung $\ddot{\phi}$ des Traktors 10 um seine Schwingungsachse 21. Infolge des P-Verhaltens von Regler 31 und Ventil 17 erzeugt die Regeleinrichtung 19 eine zum dynamischen Kraftanteil $F_{dyn}$ proportionale Stellgeschwindigkeit $\dot{z}$ des Anbaugeräts 11 relativ zum Traktor 10, so daß also die Aussage gilt

$$\dot{z} \sim F_{dyn}$$

Aus diesem Sachverhalt ergibt sich aber, daß folgender Zusammenhang gilt

$$\dot{z} \sim \ddot{\phi}$$

Das bedeutet, daß die Geschwindigkeit $\dot{z}$ des Anbaugeräts 11 relativ zum Traktor 10 proportional ist zur Nickbeschleunigung $\ddot{\phi}$ des Traktors 10.

Dieser Zusammenhang bedeutet nun, daß die Bewegungsgrößen des Anbaugeräts 11, nämlich dessen Weg z, dessen Geschwindigkeit $\dot{z}$, dessen Beschleunigung $\ddot{z}$ zu den entsprechenden Bewegungsgrößen des Traktors 10, dem Drehwinkel $\phi$, der Winkelgeschwindigkeit $\dot{\phi}$ bzw. der Winkelbeschleunigung $\ddot{\phi}$ um 90° Phasenwinkel voreilen.

Die Figur 3 zeigt nun diese Zusammenhänge näher in einem Diagramm, in dem die durch eine Rechnersimulation ermittelten Bewegungsgrößen über der Zeit t aufgetragen sind. Dabei ist in vorliegendem Fall die Winkelbeschleunigung $\ddot{\phi}$ relativ zur Schwingungsachse 21 über der Zeit aufgetragen und in ihrem späteren Verlauf der Kennlinie der Zusammenhang mit der Beschleunigung $\ddot{z}$ des Anbaugeräts 11 relativ zum Traktor 10 aufgezeigt. Zu diesem Zweck wird das Fahrzeug 10 mit dem angelenkten, als Tilgermasse dienenden Anbaugerät 11 im Zeitpunkt $t_0$ durch einen Stoß an der Vorderachse des Traktors 10 zu Schwingungen angeregt. Nach wenigen Einschwingvorgängen wird zu einem Zeitpunkt $t_1$ beim Nulldurchgang der Nickbeschleunigung $\ddot{\phi}$ die Regeleinrichtung 19 für die aktive Schwingungstilgung zugeschaltet. Dabei zeigt sich aus den nach dem Zeitpunkt $t_1$ ablaufenden Bewegungsvorgängen, daß der Verlauf der Beschleunigung $\ddot{z}$ am Anbaugerät 11 im Vergleich zum Verlauf der Nickbeschleunigung $\ddot{\phi}$ im wesentlichen um 90° Phasenwinkel voreilt und dabei gleich- und gegensinnige Bewegungen wechselweise auftreten. Die vom Einschalten des Tilgungsreglers 19 im Zeitpunkt $t_1$ um ca. 90° voreilende Kennlinie 32 für die Bewegungsgröße $\ddot{z}$ des Anbaugeräts 11 führt zu einem raschen Abklingen des Kennlinienverlaufs 33 für die zugeordnete Bewegungsgröße $\ddot{\phi}$ des Traktors 10. Ferner ist in Figur 3 vom Zeitpunkt $t_1$ an als gestrichelte Linie eine dritte Kennlinie 34 eingezeichnet, welche den Verlauf der Geschwindigkeit $\dot{z}$ des Anbaugeräts 11 darstellt und welche Kennlinie 34 im wesentlichen gleichphasig zur Kennlinie 33 verläuft, so daß auch die Aussage erfüllt ist, wonach die Geschwindigkeit $\dot{z}$ der Tilgermasse 11 proportional ist zur Nickbeschleunigung $\ddot{\phi}$ des Traktors 10. Auf diese Weise wird eine aktive Schwingungstilgung erreicht, die derjenigen einer geschwindigkeitsproportionalen passiven Dämpfung entspricht. Dabei läßt sich eine optimale Dämpfungswirkung dadurch erreichen, daß die jeweils aufgebrachte Dämpfungskraft der Bewegungsgeschwindigkeit der zu dämpfenden Masse entgegengerichtet ist und ihr Maximum bzw. ihr Minimum in den jeweiligen Nulldurchgängen des Weges erreicht. Mit der Regeleinrichtung 19 wird nun ein Optimum an Tilgungswirkung dann erreicht, wenn diese sich zum Verlauf der aktiven Dämpfungskraft gleich verhält. Dieses Optimum an Dämpfungswirkung wird mit der Regeleinrichtung 19 durch Aufbringen einer geschwindigkeitsproportionalen Dämpfungskraft erreicht, die nach Figur 3 aber nur dan gegeben ist, wenn die Anbaumasse 11 durch die Regeleinrichtung 19 so bewegt wird, daß deren Bewegungsgröße z, $\dot{z}$, $\ddot{z}$ der gleichbenannten Bewegungsgröße $\phi$, $\dot{\phi}$, $\ddot{\phi}$ des Traktors um diese ca. 90° Phasenwinkel voreilt.

Bedingt durch das Zeitverhalten von Regelventil 17 und Regler 31 wird diese Phasenvoreilung in einem realen System etwas kleiner als 90° ausfallen, was aber die Dämpfungswirkung nicht wesentlich beeinträchtigt.

Wie in Figur 2 in Verbindung mit Figur 1 näher dargestellt ist, wird die Lage des Anbaugeräts 11 auch in seiner Aushubstellung vom Lagesensor 23 abgegriffen und dem P-Regler 31 als Führungsgröße eingegeben. Auf diese Weise wird verhindert, daß bei eingeschaltetem Schwingungstilgungssystem 19 das Anbaugerät 11 in unerwünschter Weise nach einer Seite, insbesondere nach unten infolge des Eigengewichts des Anbaugeräts wegdriftet, sondern die Schwingungstilgung um eine vorbestimmte mittlere Aushubstellung erfolgt.

Anstelle der in Figur 3 dargestellten Bewegungsgrößen, nämlich der Beschleunigungen $\ddot{\phi}$ des Traktors 10 und $\ddot{z}$ der Anbaugröße 11 kann dieser Sachverhalt auch anhand anderer Bewegungsgrößen wie der vergleichbaren Geschwindigkeiten $\dot{\phi}$ und $\dot{z}$ bzw. der Wege $\phi$ und z dargestellt werden, wobei sich in vergleichbarer Weise diese Voreilung von im wesentlichen 90° ergibt.

Selbstverständlich sind an dem Traktor 10 mit dem gezeigten Schwingungstilgungssystem 19 Änderungen möglich, ohne vom Gedanken der Erfindung abzuweichen. So kann der Erfolg einer optimalen Schwingungsdämpfung auch erreicht werden, wenn sich abhängig von Änderungen von Koordinaten und Vorzeichen eine Art kinematische Umkehrung ergibt. Die aufgezeigte aktive Dämpfungseinrichtung ist nicht auf Traktoren begrenzt, sondern kann genauso gut bei Mähdreschern, Baumaschinen und vergleichbaren Maschinen vorteilhaft angewandt werden. Neben einem heckseitigen Anbau ist auch ein frontseitiger Anbau des Anbaugeräts möglich. Wenn als Kraftmeßbolzen eine Ausführungsform verwendet wird, welche die Vertikalkraft erfaßt, so kann auch in vorteilhafter Weise von der gezeigten Dreipunktanlenkung des Anbaugeräts 11 abgewichen werden. In einem solchen Fall kann dann auch eine Schwingungstilgung bei anderen Anlenkungsarten durchgeführt werden, wenn z.B. das Anbaugerät am Traktor nur abgestützt wird oder selbst von einem Stützrad Gebrauch macht. Diese Möglichkeit ohne Dreipunktanlenkung auszukommen besteht auch, wenn anstelle eines die Vertikalkraft messenden Kraftmeßbolzens die Signale eines Drucksensors verwendet werden.

**Patentansprüche**

1. Fahrzeug (10) mit einem System zur dynamischen Stabilisierung seiner Bewegungen, insbesondere von Nickschwingungen um eine im wesentlichen horizontale Schwingungsachse (21), mit einem gelenkig am Fahrzeug (10) befestigten Anbaugerät (11), einem zu dessen Bewegung vorgesehenen Kraftheber (15) und einer auf ein Signal ansprechenden Regeleinrichtung (19), mit der im Zusammenwirken mit dem Kraftheber (15) das als Tilgermasse dienende Anbaugerät (11) im Bereich seiner Aushubstellung in Abhängigkeit von den Schwingungen des Fahrzeugs (10) während der Fahrt bewegbar ist, dadurch gekennzeichnet, daß diese Bewegung derart erfolgt, daß die Bewegungsgröße ($z$, $\dot{z}$, $\ddot{z}$) des Anbaugeräts (11) der zugeordneten Bewegungsgröße ($\phi$, $\dot{\phi}$, $\ddot{\phi}$) des Fahrzeugs (10) um nahezu 90° Phasenwinkel vorauseilt.

2. Fahrzeug nach Anspruch 1, dadurch gekennzeichnet, daß das Signal durch mindestens einen Kraftmeßbolzen (22) erzeugt wird, mit dem das Anbaugerät (11) mit Hilfe eines Anlenkgestänges (13, 14) am Fahrzeug (10) angelenkt ist.

3. Fahrzeug nach Anspruch 2, dadurch gekennzeichnet, daß das Signal aus einer im Kraftmeßbolzen (22) ermittelten Horizontalkraft abgeleitet wird.

4. Fahrzeug nach Anspruch 2, dadurch gekennzeichnet, daß das Signal aus einer im Kraftmeßbolzen (22) ermittelten Vertikalkraft abgeleitet wird.

5. Fahrzeug nach Anspruch 1, dadurch gekennzeichnet, daß das Signal aus dem Druck des Krafthebers (15) abgeleitet wird.

6. Fahrzeug nach einem oder mehreren der Ansprüche 1 bis 5, dadurch gekennzeichnet, daß die Regeleinrichtung (19) zur Schwingungstilgung einen P-Regler (31) und ein Proportionalventil (17) aufweist.

7. Fahrzeug nach einem oder mehreren der Ansprüche 1 bis 6, dadurch gekennzeichnet, daß die Regeleinrichtung (19) Mittel (28) aufweist, mit deren Hilfe aus den Istwerten der kraftabhängigen Signale der dynamische Kraftanteil ($F_{dyn}$) herausgefiltert wird und insbesondere dem Regler (31) als Eingangsgröße zugeführt wird.

8. Fahrzeug nach Anspruch 7, dadurch gekennzeichnet, daß die Mittel einen den statischen Kraftanteil ($F_{stat}$) herausfilternden Tiefpaß (28) aufweisen.

9. Fahrzeug nach Anspruch 7, dadurch gekennzeichnet, daß die Mittel ein den statischen Mittelwert des Kraftmeßbolzen-Ausgangssignals speicherndes Bauelement aufweisen.

10. Fahrzeug nach einem oder mehreren der Ansprüche 1 bis 9, dadurch gekennzeichnet, daß ein zweiter Sensor (23) vorgesehen ist, der von der Lage des Anbaugeräts (11) relativ zum Fahrzeug (10) abhängige Ausgangssignale liefert.

11. Fahrzeug nach Anspruch 10, dadurch gekennzeichnet, daß die lageabhängigen Signale des zweiten Sensors (23) auf die Eingangsseite des P-Reglers (31) rückgeführt werden.

12. Verfahren zur dynamischen Stabilisierung der Bewegungen eines Fahrzeugs (10) um eine insbesondere horizontale Schwingungsachse (21), insbesondere von Nickschwingungen eines Traktors (10), wobei am Fahrzeug (10) ein Anbaugerät (11) gelenkig angebaut und durch einen Kraftheber (15) relativ zum Fahrzeug (10) verstellbar ist in Abhängigkeit der von den Schwingungen des Fahrzeugs (10) und dem angekoppelten Anbaugerät (11) ermittelten abhängigen Signale, dadurch gekennzeichnet, daß davon abhängig die Bewegungsgröße (z, $\dot{z}$, $\ddot{z}$) des Anbaugeräts (11) mit nahezu 90 Grad Phasenwinkel-Voreilung gegenüber der vergleichbaren Bewegungsgröße ($\phi$, $\dot{\phi}$, $\ddot{\phi}$) des Fahrzeugs (10) gesteuert wird.

13. Verfahren nach Anspruch 12, dadurch gekennzeichnet, daß als Eingangssignale für einen P-Regler (31) zum dynamischen Kraftanteil eines Kraftmeßbolzens (22) proportionale Signale ermittelt und dem Regler (31) zugeführt werden.

14. Verfahren nach Anspruch 12 oder 13, dadurch gekennzeichnet, daß von der Lage des Anbaugeräts (11) zum Fahrzeug (10) abhängige Signale im P-Regler (31) in einer die Aushubstellung beibehaltenden Weise verarbeitet werden.

**Claims**

1. Vehicle (10) with a system for the dynamic stabilisation of its movements, in particular of pitching oscillations about an essentially horizontal axis of oscillation (21) having an implement (11) which is attached to the vehicle (10) in an articulated fashion, a power lifter (15) provided for moving said implement and a control device (19) which responds to a signal and with which the implement (11) serving as damper mass can be moved in conjunction with the power lifter (15) in the region of its excavation position as a function of the oscillations of the vehicle (10) during travelling, characterised in that this movement takes place in such a way that the movement variable (z, $\dot{z}$, $\ddot{z}$) of the implement (11) of the associated movement variable ($\phi$, $\dot{\phi}$, $\ddot{\phi}$) of the vehicle (10) is in advance by virtually 90° phase angle.

2. Vehicle according to Claim 1, characterised in that the signal is generated by at least one force measuring bolt (22) with which the implement (11) is coupled to the vehicle (10) with the aid of a coupling linkage (13, 14).

3. Vehicle according to Claim 2, characterised in that the signal is derived from a horizontal force detected in the force measuring bolt (22).

4. Vehicle according to Claim 2, characterised in that the signal is derived from a vertical force detected in the force measuring bolt (22).

5. Vehicle according to Claim 1, characterised in that the signal is derived from the pressure of the power lifter (15).

6. Vehicle according to one or more of Claims 1 to 5, characterised in that the control device (19) has a P controller (31) and a proportional valve (17) for the purpose of oscillation damping.

7. Vehicle according to one or more of Claims 1 to 6, characterised in that the control device (19) has means (28) with the aid of which the dynamic force portion ($F_{dyn}$) is filtered out of the actual values of the force-dependent signals and in particular fed to the controller (31) as input variable.

8. Vehicle according to Claim 7, characterised in that the means have a low-pass filter (28) which filters out the static force portion ($F_{stat}$).

9. Vehicle according to Claim 7, characterised in that the means have a constructional element which stores the static mean value of the force measuring bolt output signal.

10. Vehicle according to one or more of Claims 1 to 9, characterised in that a second sensor (23) is provided which supplies output signals dependent on the position of the implement (11) relative to the vehicle (10).

11. Vehicle according to Claim 10, characterised in that the position-dependent signals of the second sensor (23) are fed back to the input side of the P controller (31).

12. Method for the dynamic stabilisation of the movements of a vehicle (10) about an in particular horizontal axis of oscillation (21), in particular of pitching oscillations of a tractor (10), an implement (11) being installed on the vehicle (10) in an articulated fashion and being adjustable relative to the vehicle (10) by means of a power lifter (15) as a function of the dependent signals which are obtained from the oscillations of the vehicle (10) and the coupled-on implement (11), characterised in that as a function of this the movement variable (z, $\dot{z}$, $\ddot{z}$) of the implement (11) is controlled with virtually 90 degree phase angle advance with respect to the comparable movement variable ($\phi$, $\dot{\phi}$, $\ddot{\phi}$) of the vehicle (10).

13. Method according to Claim 12, characterised in that signals which are proportional to the dynamic force portion of a force measuring bolt (22) are obtained as input signals for a P controller (31) and fed to the controller (31).

14. Method according to Claim 12 or 13, characterised in that signals which are dependent on the position of the implement (11) on the vehicle (10) are processed in the P controller (31) in a manner which maintains the excavation position.

**Revendications**

1. Véhicule (10) équipé d'un système de stabilisation dynamique de ses mouvements notamment de ses mouvements de tangage autour d'un axe de tangage (21) essentiellement horizontal, avec un outil porté (11) fixé de manière articulée au véhicule (10), un vérin (15) prévu pour déplacer l'outil et une installation de régulation (19) mise en oeuvre par un signal et avec laquelle, en relation avec le vérin (15), l'outil (11) servant de masse d'inertie est déplacé dans la zone de sa position relevée, en fonction des oscillations du véhicule (10) pendant son déplacement, véhicule caractérisé en ce que le mouvement de la masse est telle que les grandeurs de déplacement $(z, \dot{z}, \ddot{z})$ do l'outil porté (11) soient en précession pratiquement de 90° par rapport aux grandeurs de mouvement associées $(\phi, \dot{\phi}, \ddot{\phi})$ du véhicule.

2. Véhicule selon la revendication 1, caractérisé en ce que le signal est généré par au moins un goujon dynamométrique (22) par lequel l'outil porté (11) est articulé sur le véhicule (10) à l'aide d'une barre d'articulation (13, 14).

3. Véhicule selon la revendication 2, caractérisé on ce que le signal est dérivé de la force horizontale fournie par un goujon dynamométrique (22).

4. Véhicule selon la revendication 2, caractérisé en ce que le signal est dérivé d'une force verticale obtenue dans un goujon dynamométrique (22).

5. Véhicule selon la revendication 1, caractérisé en ce que le signal est obtenu à partir de la pression du capteur de pression (15).

6. Véhicule selon l'une ou plusieurs des revendications 1 à 5, caractérisé en ce que l'installation de régulation (19) comporte un régulateur (P, 31) et une vanne proportionnelle (17) pour la suppression des oscillations.

7. Véhicule selon l'une ou plusieurs des revendications 1 à 6, caractérisé en ce que l'installation de régulation (19) comporte des moyens (28) à l'aide desquels on élimine par filtrage la composante dynamique de force $(F_{dyn})$ à partir de la valeur réelle des signaux dépendant de la force et le signal ainsi obtenu est appliqué au régulateur (31) comme grandeur d'entrée.

8. Véhicule selon la revendication 7, caractérisé en ce que les moyens se composent d'un filtre passe-bas (28) séparant la composante statique de la force $(F_{stat})$.

9. Véhicule selon la revendication 7, caractérisé en ce que les moyens comprennent un composant mettant en mémoire la valeur moyenne statistique du signal de sortie du goujon dynamométrique.

10. Véhicule selon l'une ou plusieurs des revendications 1 à 9, caractérisé par un second capteur (23) qui fournit les signaux de sortie dépendant de la position de l'outil porté (11) par rapport au véhicule (10).

11. Véhicule selon la revendication 10, caractérisé en ce que les signaux dépendant de la position du second capteur (23) sont appliqués en retour à l'entrée du régulateur (P, 31).

12. Procédé de stabilisation dynamique des mouvements d'un véhicule (10) autour d'un axe d'oscillation (21) notamment horizontal en particulier les oscillations de tangage d'un tracteur (10), un outil porté (11) étant monté de manière articulé sur le véhicule (10) et point être commandé en position par rapport au véhicule (10) par un moyen de levage dynamique (15) en fonction des oscillations du véhicule (10) et des signaux obtenus à partir de l'outil porté, attelé, procédé caractérisé en ce que les grandeurs de mouvement $(z, \dot{z}, \ddot{z})$ qui en dépendent pour l'outil porté (11) sont commandées avec une précession d'un angle de phase d'au moins 90° par rapport aux grandeurs de mouvements comparables $(\phi, \dot{\phi}, \ddot{\phi})$ du véhicule (10).

13. Procédé selon la revendication 12, caractérisé en ce que comme grandeurs d'entrée du régulateur proportionnel P (31), on détermine les signaux proportionnels au goujon dynamométrique (22) et on fournit ces signaux au régulateur (31).

14. Procédé selon la revendication 12 ou 13, caractérisé en ce que les signaux dépendant de la position de l'outil (11) par rapport au véhicule (50) sont traités dans le régulateur P (31) d'une manière qui conserve la position de sortie.

FIG. 1

EP 0 299 223 B1

FIG. 2

EP 0 299 223 B1

FIG.3